# FASCICULE DE BREVET EUROPEEN

(11) **EP 3 769 952 B1**
(45) Date de publication et mention de la délivrance du brevet: **07.09.2022**
(21) Numéro de dépôt: 20186958.3
(22) Date de dépôt: 21.07.2020
(51) Int. Cl.: B32B 3/04, B32B 3/08, B32B 17/06, B32B 17/10, B32B 27/30, H05B 3/10, H05B 3/86, H05B 3/26

(54) **ÉLÉMENT DE PIÈCE DE CARROSSERIE DÉGIVRANT**
ENTEISENDES ELEMENT EINES KAROSSERIETEILS
ELEMENT FOR DE-ICING VEHICLE BODY PART

(30) Priorité: 22.07.2019 FR 1908302
(43) Date de publication de la demande: 27.01.2021
(73) Titulaire: Compagnie Plastic Omnium SE, 69007 Lyon (FR)
(72) Inventeur: DUBOST, Elise, 01150 Sainte-Julie (FR); STABLO, Frédéric, 01150 Sainte-Julie (FR)
(74) Mandataire: LLR

(56) Documents cités:
- WO-A1-2019/121757
- FR-A1- 3 041 104
- FR-A1- 3 075 720

## Description

L'invention concerne le domaine de la fabrication d'un élément en matière plastique, destiné à être monté sur une pièce de carrosserie de véhicule automobile. De nombreux véhicules modernes sont équipés d'éléments de carrosserie en matière plastique pouvant équiper par exemple un hayon arrière, un flanc de portière, des pare-chocs avant et arrière, un toit, etc.

En particulier, depuis l'introduction des systèmes d'assistance à la conduite, on a besoin de placer sur certaines pièces de carrosserie en plastique des capteurs de différentes sortes, afin de mesurer des paramètres physiques extérieurs représentatifs de l'environnement extérieur du véhicule automobile. L'ensemble des valeurs de ces paramètres forme des informations disponibles en temps réel sur l'environnement du véhicule.

On utilise alors des éléments de carrosserie, rapportés sur la pièce de carrosserie, ayant, par exemple, une fonction de radôme, c'est-à-dire un élément transparent aux ondes électromagnétiques protégeant et cachant des capteurs.

A titre d'exemple, les pare-chocs sont désormais fréquemment équipés de radars de proximité qui permettent d'assister le conducteur lors des phases de manœuvre de stationnement du véhicule automobile à basse vitesse.

Certains capteurs, comme celui cité dans l'exemple ci-dessus, peuvent voir leur fonctionnement normal déréglé par la présence d'une couche de glace, de neige ou de givre en cas de température en dessous de 10 degrés Celsius car le mouvement du véhicule a un effet négatif sur la température. On peut donc observer des dépôts de givre même à des températures positives. Une couche de givre vient perturber le passage normal des ondes électromagnétiques et est une source d'erreur dans la mesure des paramètres physiques extérieurs.

Afin d'éviter le dépôt de givre, qui vient non seulement rendre le système d'assistance inutilisable, mais qui de surcroit peut générer de fausses alarmes, il est indispensable de prévoir un système de dégivrage sur l'élément pour pièce de carrosserie, par exemple sur la zone de la pièce de carrosserie qui sert de radôme.

Un tel système de dégivrage est traditionnellement formé d'une piste chauffante constituée de fils conducteurs capables de transformer une énergie électrique en énergie thermique. Cette piste chauffante est généralement positionnée sur la face tournée vers l'intérieur du véhicule de l'élément de carrosserie afin d'être à l'abri des agressions venues du milieu extérieur. Elle chauffe ainsi la face tournée vers l'extérieur du véhicule de l'élément de carrosserie qui est soumise au dépôt de givre, par conduction thermique à travers l'épaisseur de l'élément en question.

Une telle réalisation présente l'inconvénient de devoir chauffer l'élément de carrosserie dans toute son épaisseur afin d'assurer la fonction de dégivrage de la face externe de l'élément de carrosserie, ce qui rend le temps de dégivrage long.

Également, le temps de dégivrage est aussi allongé par le fait que ces éléments sont en général réalisés en matière plastique présentant une faible conductivité thermique.

FR 3 041 104 A1 divulgue un dispositif de protection d'un radar de véhicule automobile, comprenant au moins un moyen chauffant et un cache, le cache comportant au moins une zone de transmission apte à être traversée par des ondes dudit radar, caractérisé en ce que la zone de transmission comporte un matériau à la fois isolant électriquement et apte à conduire la chaleur émise par le moyen chauffant, par exemple du verre.

L'invention a pour but de remédier à ces inconvénients en proposant un élément de pièce de carrosserie qui permet une meilleure conduction thermique que les éléments de l'art antérieur entre la piste chauffante d'une part et la face externe de l'élément de carrosserie d'autre part, afin de raccourcir le temps de dégivrage de la face en question.

À cet effet, l'invention a pour objet un élément pour pièce de carrosserie de véhicule automobile selon la revendication 1.

Ainsi, les pistes chauffantes de l'élément de carrosserie sont très proches de la surface externe de l'élément de carrosserie, car séparée de celle par une couche de verre. L'énergie thermique de dégivrage doit donc traverser une faible épaisseur de matériau afin de chauffer la surface externe, ce qui permet un dégivrage rapide.

De plus, le verre présente une conductivité thermique bien supérieure à celle des matières plastiques dans lesquelles sont réalisés les éléments de carrosserie connus. Ainsi, le dégivrage est aussi accéléré grâce à cette utilisation du verre.

L'élément pour pièce de carrosserie selon l'invention peut en outre comporter l'une plusieurs des caractéristiques suivantes, prises seules ou en combinaison :
- la couche de verre a une épaisseur inférieure à 500 µm ;
- le corps principal est surmoulé sur le film et la couche de verre ;
- le film comporte un élément de connexion apte à relier les pistes chauffantes à une source de d'énergie ;
- le corps principal est surmoulé sur l'élément de connexion ;
- le film est un film PVB ou un film plastique transparent ;
- le film comporte une face recouverte par la couche de verre et une couche adhésive apposée sur ladite face qui est apte à adhérer avec la couche de verre ;
- la couche de verre est au moins en partie sérigraphiée et est apte à masquer une zone du film ;
- l'élément pour pièce de carrosserie est un radôme.

L'invention concerne également un procédé de fabrication d'un élément de pièce de carrosserie selon l'invention au moyen d'un moule comportant une cavité de moulage, dans lequel :
- on dépose la couche de verre sur une paroi de la cavité de moulage,
- on dépose le film sur la couche de verre,
- on surmoule le corps principal par injection de matière plastique dans la cavité.

Avantageusement, dans ce procédé, le film comportant des pistes chauffantes comporte un élément de connexion apte à relier les pistes chauffantes à une source d'énergie sur lequel est surmoulé le corps principal en matière plastique.

Avantageusement, on colle le film sur la couche de verre à l'aide d'une couche adhésive apposée sur le film.

Avantageusement, on sérigraphie la couche de verre de manière à masquer une zone du film.

L'invention concerne également un procédé de fabrication d'un élément de pièce de carrosserie selon l'invention au moyen d'un moule comportant une cavité de moulage, dans lequel :
- on dépose le film sur la couche de verre,
- on dépose la couche de verre sur une paroi de la cavité de moulage,
- on surmoule le corps principal par injection de matière plastique dans la cavité.

Avantageusement, dans ce procédé, le film comportant les pistes chauffantes comporte un élément de connexion apte à relier les pistes chauffantes à une source de d'énergie sur lequel est surmoulé le corps principal en matière plastique.

Avantageusement, on colle le film sur la couche de verre à l'aide d'une couche adhésive apposée sur le film.

Avantageusement, on sérigraphie la couche de verre de manière à masquer une zone du film.

### Brève description des figures

L'invention sera mieux comprise à la lecture de la description qui va suivre donnée uniquement à titre d'exemple et faite en se référant au dessin annexé dans lequel :

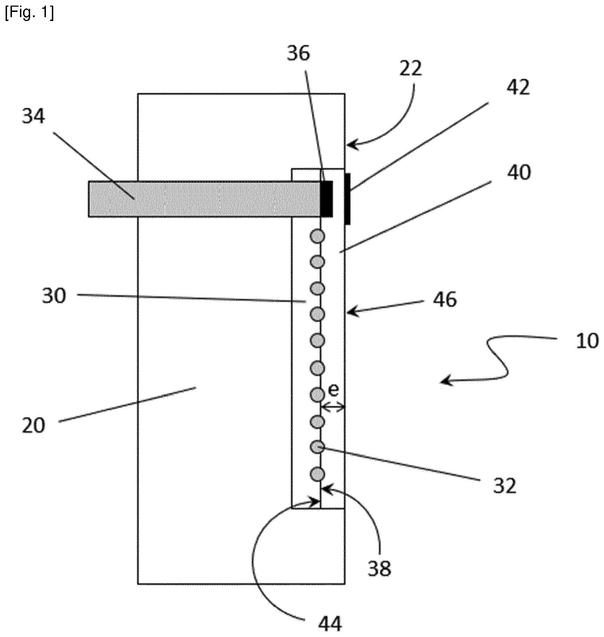

[Fig. 1] La figure 1 est une vue en coupe transversale d'un élément de pièce de carrosserie selon l'invention.

### Description détaillée

On se réfère maintenant à la figure 1 qui représente un élément 10 pour pièce de carrosserie de véhicule automobile. Il est ici représenté en coupe transversale, suivant un plan orienté verticalement selon l'axe allant de l'avant vers l'arrière du véhicule, lorsque l'élément est assemblé sur un véhicule automobile.

L'élément 10 comporte un corps principal 20 en matière plastique. Sur ce corps principal 20 est assemblé un film 30 qui comporte une piste chauffante 32. Le film 30 recouvre ici partiellement le corps principal 20, c'est-à-dire qu'une des faces du corps principal 20 est recouverte en partie par le film 30. De manière alternative, le film 30 pourrait recouvrir intégralement une face du corps principal 20 de l'élément 10. Le film 30 comporte des pistes chauffantes 32 qui s'étendent sur une surface du film 30 qui est opposée à la surface du corps principal 20 sur laquelle est assemblé le film 30. Sur la figure 1, ces pistes chauffantes s'étendent selon une direction perpendiculaire au plan de coupe de la figure. Le film 30 est recouvert par une couche de verre 40. Dans ce mode de réalisation, la couche de verre 40 recouvre intégralement une face du film 30 qui est opposée au corps principal 20. Ainsi, les pistes chauffantes 32 sont également recouvertes par la couche de verre 40. La couche de verre ne recouvre pas nécessairement intégralement le film 30. Ainsi, une configuration présentant une partie du film 30 non recouverte par la couche de verre 40 est envisageable.

Cette architecture présente l'avantage d'avoir des pistes chauffantes 32 qui sont proches d'une face externe 46, qui est la face à dégivrer. Ainsi, cela permet un réchauffement rapide de cette face externe 46, et donc un dégivrage rapide. De la même manière, le verre présente une conductivité thermique avantageuse, qui est par exemple supérieure à celle des matières plastiques. Ainsi, la couche de verre conduit mieux la chaleur produite par les pistes chauffantes pour le dégivrage, ce qui permet d'avoir un dégivrage rapide.

Dans l'exemple présenté ci-dessus, l'élément de pièce de carrosserie 10 comporte plusieurs pistes chauffantes 32. De manière alternative, un élément similaire à celui-ci et faisant partie de l'invention peut comporter une seule piste chauffante 32, par exemple arrangée en serpentin sur le film 30.

La couche de verre 40 possède une épaisseur (représenté « e » sur la figure 1) qui est comprise entre 100 µm et 800 µm. Dans cette gamme d'épaisseur, la couche est suffisamment fine pour très bien conduire la chaleur de dégivrage produite par les pistes chauffantes 32. De plus, une telle épaisseur permet à la couche verre 40 de présenter une légère flexibilité permettant d'éviter la rupture de celle-ci en cas de choc léger, évitant ainsi que des débris de verre se répandent sur la chaussée, ce qui augmente la sécurité du dispositif. De plus, cette finesse permet également à la couche d'épouser la forme galbée de l'élément de pièce carrosserie 10. Avantageusement, l'épaisseur de la couche de verre 40 est inférieure à 500 µm. C'est en dessous de cette valeur d'épaisseur que la couche de verre 40 présente les propriétés de flexibilité les plus intéressantes.

De manière avantageuse, le corps principal 20 en plastique est surmoulé sur le film 30 et la couche de verre 40. De cette façon, le corps principal, la couche de verre 40 et le film 30 forment une pièce unique solidaire. De plus, du côté destiné à être tourné vers l'extérieur du véhicule (représenté à gauche sur la figure) une fois l'élément assemblé sur un véhicule, il y a continuité entre la face externe 46 de la couche de verre et des surfaces externes 22 du corps principal 20, ce qui permet de conférer à l'élément une surface externe relativement uniforme.

L'élément 10 présente également un élément de connexion 34 électrique. Cet élément de connexion 34 permet de connecter électriquement la ou les pistes chauffantes 32 à une source d'énergie électrique. Cette disposition permet de faire passer du courant dans les pistes 32 afin de les faire chauffer pour actionner le dégivrage.

De manière préférentielle, le corps principal 20 est surmoulé sur l'élément de connexion 34, en plus d'être surmoulé sur le film 30 et la couche de verre 40. Cette disposition permet d'éviter de prévoir un passage pour l'élément de connexion 34 dans le corps principal 20 durant le moulage de celui-ci. Ainsi, cela facilite la confection de l'élément 10.

Avantageusement, le film 30 est un film plastique transparent, qui peut être un film PVB (Poly(butyral de vinyle)).

Le film 30 comporte une face 38 recouverte par la couche de verre. Cette face 38 est donc en contact avec la couche de verre 40.

De manière avantageuse, une couche adhésive 44 est apposée sur la face 38 recouverte par la couche de verre 40. Cette couche adhésive 44 permet une bonne adhérence de la couche de verre 40 sur le film 30. De plus, elle permet, en cas de choc violent venant briser la couche de verre 40, de retenir des débris de la couche de verre 40, et d'ainsi empêcher ceux-ci de tomber sur la chaussé sur laquelle le véhicule se déplace. Cette disposition permet d'augmenter la sécurité des autres usagers de la route.

Avantageusement, la couche de verre 40 est en partie sérigraphiée. Par en partie, on entend que la sérigraphie ne recouvre qu'une partie de la face externe 46 de la couche de verre 40. De cette manière, des zones sérigraphiées de cette couche 40 permettent de cacher des zones du film 30 dont on ne souhaite pas qu'elles soient visibles depuis l'extérieur du véhicule. La sérigraphie 42 permet notamment de cacher une zone technique 36 du film 30. On peut également occulter d'autres zones du film 30. De manière alternative, la couche de verre 40 peut être intégralement sérigraphiée.

L'élément de carrosserie est par exemple un radôme, c'est-à-dire qu'il est au moins partiellement transparent aux ondes radar. Ainsi, l'élément de carrosserie 10 selon l'invention est adapté à la protection d'un radar de véhicule, type radar de détection d'obstacles à l'avant du véhicule, situé par exemple sur une face avant de véhicule automobile. Il peut également servir de protection à un radar de recul, par exemple placé dans un pare-chocs arrière de véhicule.

Nous allons maintenant détailler le fonctionnement de l'élément de carrosserie 10.

Par temps froid, il se peut qu'une couche de glace, ou de givre, se dépose sur la face externe 46 de la couche de verre 40. En conséquence, les pistes chauffantes 32 sont activées et commencent à produire de la chaleur. Cette chaleur va se diffuser à travers la couche de verre 40 pour venir chauffer la face externe 46 de la couche de verre 40. Ainsi, la glace ou le givre déposé sur la face externe 46 est chauffé, ce qui provoque la fonte de celui-ci. Le dégivrage est donc assuré.

L'invention a également pour objet un procédé de fabrication de pièce de carrosserie selon l'invention. Ce procédé comprend successivement les étapes suivantes.

D'abord on dépose la couche de verre 30 sur une paroi de la cavité de moulage du moule.

Ensuite, on dépose le film 30 sur la couche de verre 40. À la fin de cette étape, le film 30 et la couche de verre sont en position pour commencer l'étape suivante de surmoulage, qui est décrite plus bas. La face de la couche de verre 40 qui est en contact avec la paroi de la cavité du moule est ainsi protégée lors du moulage. Cette face, qui sera la face externe 46 de la couche de verre 40 une fois la fabrication terminée, est donc préservée lors du surmoulage.

Enfin, on surmoule le corps principal 20 par injection de matière plastique dans le moule. On peut noter que la pression de la matière plastique injectée permet de plaquer le film 30 et la couche de verre 40 sur la paroi du moule. Ainsi, il y a une continuité entre la surface externe 22 du corps principal 20 et la face externe 46 de la couche de verre 40.

Avantageusement, lors de l'étape de surmoulage, le corps principal 20 est également surmoulé sur l'élément de connexion 34. Ainsi, on évite d'avoir à prévoir un passage pour l'élément de connexion 34 dans le corps principal 20 durant le moulage de celui-ci. Ainsi, cela facilite le procédé en évitant d'ajouter une étape de montage de l'élément de connexion 34, et permet aussi un moulage plus facile.

Avantageusement, on colle le film 30 sur la couche de verre 40 à l'aide d'une couche adhésive 44 apposée sur le film 30. La présence de cette couche adhésive 44 sur le film 30 permet un maintien du film 30 sur la couche de verre 40 lors du moulage par injection du corps principal 20, et donc une bonne mise en position du film par rapport à la couche de verre 40.

Avantageusement encore, on peut sérigraphier la couche de verre afin de masquer une zone du film 30, une fois l'élément assemblé. La sérigraphie est effectuée de préférence sur la face externe 46 de la couche de verre 40.

De manière alternative au procédé décrit précédemment, on peut également fabriquer l'élément de pièce de carrosserie 10 en intervertissant les deux premières étapes du procédé précédant. Ainsi, on dépose en premier lieu le film 30 sur la couche de verre 40, puis on dépose la couche de verre 40, sur laquelle a déjà été déposé le film 30, sur une paroi de la cavité de moulage. Déposer le film 30 sur la couche de verre 40 hors du moule permet une meilleure et plus facile mise en position de ces deux éléments l'un par rapport à l'autre.

À l'exception de cette inversion des deux étapes précitées, toutes les autres étapes du procédé décrit précédemment, et tous les effets techniques associés sont réalisables avec le procédé dans lequel on dépose le film 30 sur la couche de verre 40 avant de déposer la couche de verre sur une paroi de la cavité du moule.

L'invention n'est pas limitée aux modes de réalisation présentés et d'autres modes de réalisation apparaîtront clairement à l'homme du métier.

### Liste de références

10 : élément pour pièce de carrosserie
20 : corps principal en matière plastique
22 : surface externe du corps principal
30 : film technique
32 : pistes chauffantes
34 : élément de connexion
36 : zone technique du film
38 : face du film recouverte par la couche de verre
40 : couche de verre
42 : sérigraphie
44 : couche adhésive
46 : face externe de la couche de verre

## Revendications

1. Élément (10) pour pièce de carrosserie de véhicule automobile **caractérisé en ce qu'**il comprend successivement un corps principal (20) en matière plastique, recouvert au moins partiellement d'un film (30) comportant une piste chauffante (32), le film (30) étant lui-même recouvert au moins partiellement par une couche de verre (40), **caractérisé en ce que** la couche de verre (40) a une épaisseur comprise entre 100 µm et 800 µm, de préférence inférieure à 500 µm.

2. Élément (10) selon la revendication précédente, dans lequel le corps principal (20) est surmoulé sur le film (30) et la couche de verre (40).

3. Élément (10) selon l'une des revendications précédentes dans lequel le film (30) comporte un élément de connexion (34) apte à relier les pistes chauffantes (32) à une source de d'énergie.

4. Élément (10) selon les revendications 2 et 3 dans lequel le corps principal (20) est surmoulé sur l'élément de connexion (34).

5. Élément (10) selon l'une des revendications précédentes dans lequel le film (30) est un film PVB ou un film plastique transparent.

6. Élément (10) selon l'une des revendications précédentes dans lequel le film (30) comporte une face recouverte par la couche de verre (40) et une couche adhésive (44) apposée sur ladite face qui est apte à adhérer avec la couche de verre 40.

7. Élément (10) selon l'une des revendications précédentes dans lequel la couche de verre (40) est au moins en partie sérigraphiée et est apte à masquer une zone du film (30).

8. Élément (10) selon l'une des revendications précédentes qui est un radôme.

9. Procédé de fabrication d'un élément (10) de pièce de carrosserie selon l'une des revendications précédentes au moyen d'un moule comportant une cavité de moulage, **caractérisé en ce que** :
- on dépose la couche de verre (40) sur une paroi de la cavité de moulage,
- on dépose le film (30) sur la couche de verre (40),
- on surmoule le corps principal (20) par injection de matière plastique dans la cavité.

10. Procédé selon la revendication précédente dans lequel le film (30) comportant les pistes chauffantes (32) comporte un élément de connexion (34) apte à relier les pistes chauffantes (32) à une source d'énergie sur lequel est surmoulé le corps principal (20) en matière plastique.

11. Procédé selon l'une des revendications 9 et 10 dans lequel on colle le film (30) sur la couche de verre (40) à l'aide d'une couche adhésive (44) apposée sur le film.

12. Procédé selon l'une des revendications 9 à 11 dans lequel on sérigraphie la couche de verre (40) de manière à masquer une zone du film.

13. Procédé de fabrication d'un élément (10) de pièce de carrosserie selon l'une des revendications 1 à 8 au moyen d'un moule comportant une cavité de moulage, **caractérisé en ce que** :
- on dépose le film (30) sur la couche de verre (40),
- on dépose la couche de verre (40) sur une paroi de la cavité de moulage,
- on surmoule le corps principal (20) par injection de matière plastique dans la cavité.

14. Procédé selon la revendication précédente dans lequel le film (30) comportant les pistes chauffantes (32) comporte un élément de connexion (34) apte à relier les pistes chauffantes (32) à une source de d'énergie sur lequel est surmoulé le corps principal (20) en matière plastique.

15. Procédé selon l'une des revendications 13 et 14 dans lequel on colle le film (30) sur la couche de verre (40) à l'aide d'une couche adhésive (44) apposée sur le film (30).

16. Procédé selon l'une des revendications 13 à 15 dans lequel on sérigraphie la couche de verre (40) de manière à masquer une zone du film (30).

## Patentansprüche

1. Element (10) für ein Karosserieteil eines Kraftfahrzeugs, **dadurch gekennzeichnet, dass** es nacheinander einen Hauptkörper (20) aus Kunststoff aufweist, der zumindest teilweise mit einer Folie (30) bedeckt ist, die eine Heizbahn (32) aufweist, wobei die Folie (30) ihrerseits zumindest teilweise mit einer Glasschicht (40) bedeckt ist, **dadurch gekennzeichnet, dass** die Glasschicht (40) eine Dicke zwischen 100 µm und 800 µm, vorzugsweise weniger als 500 µm, hat.

2. Element (10) nach dem vorhergehenden Anspruch, wobei der Hauptkörper (20) auf die Folie (30) und die Glasschicht (40) aufgespritzt ist.

3. Element (10) nach einem der vorhergehenden Ansprüche, bei dem die Folie (30) ein Verbindungselement (34) aufweist, das eingerichtet ist, die Heizbahnen (32) mit einer Energiequelle zu verbinden.

4. Element (10) nach Anspruch 2 und 3, bei dem der Hauptkörper (20) auf das Verbindungselement (34) aufgespritzt ist.

5. Element (10) nach einem der vorhergehenden Ansprüche, wobei die Folie (30) eine PVB-Folie oder eine transparente Kunststofffolie ist.

6. Element (10) nach einem der vorhergehenden Ansprüche, bei dem die Folie (30) eine von der Glasschicht (40) bedeckte Seite und eine auf dieser Seite angebrachte Klebeschicht (44) aufweist, die eingerichtet ist, mit der Glasschicht (40) zu verkleben.

7. Element (10) nach einem der vorhergehenden Ansprüche, bei dem die Glasschicht (40) zumindest teilweise siebgedruckt ist und eingerichtet ist, einen Bereich der Folie (30) zu verdecken.

8. Element (10) nach einem der vorhergehenden Ansprüche, das ein Radom ist.

9. Verfahren zur Herstellung eines Elements (10) eines Karosserieteils nach einem der vorhergehenden Ansprüche mittels einer Form, die einen Formhohlraum aufweist, **dadurch gekennzeichnet, dass**:
- die Glasschicht (40) auf einer Wand des Formhohlraums abgelegt wird,
- die Folie (30) auf die Glasschicht (40) aufgebracht wird,
- der Hauptkörper (20) durch Einspritzen von Kunststoff in den Hohlraum aufgespritzt wird.

10. Verfahren nach dem vorhergehenden Anspruch, bei dem die Folie (30), die die Heizbahnen (32) aufweist, ein Verbindungselement (34) aufweist, das eingerichtet ist, die Heizbahnen (32) mit einer Energiequelle zu verbinden, auf die der Hauptkörper (20) aus Kunststoff aufgespritzt ist.

11. Verfahren nach einem der Ansprüche 9 oder 10, bei dem die Folie (30) mithilfe einer auf der Folie angebrachten Klebeschicht (44) auf die Glasschicht (40) geklebt wird.

12. Verfahren nach einem der Ansprüche 9 bis 11, bei dem die Glasschicht (40) im Siebdruckverfahren so bedruckt wird, dass ein Bereich der Folie verdeckt wird.

13. Verfahren zur Herstellung eines Elements (10) eines Karosserieteils nach einem der Ansprüche 1 bis 8 mittels einer Form, die einen Formhohlraum aufweist, **dadurch gekennzeichnet, dass**:
- die Folie (30) auf der Glasschicht (40) abgelegt wird,
- die Glasschicht (40) auf einer Wand des Formhohlraums abgelegt wird,
- der Hauptkörper (20) durch Einspritzen von Kunststoff in den Hohlraum aufgespritzt wird.

14. Verfahren nach dem vorhergehenden Anspruch, bei dem die Folie (30), die die Heizbahnen (32) aufweist, ein Verbindungselement (34) aufweist, das eingerichtet ist, die Heizbahnen (32) mit einer Energiequelle zu verbinden, auf die der Hauptkörper (20) aus Kunststoffmaterial aufgespritzt ist.

15. Verfahren nach einem der Ansprüche 13 oder 14, bei dem die Folie (30) mithilfe einer auf der Folie (30) aufgebrachten Klebeschicht (44) auf die Glasschicht (40) geklebt wird.

16. Verfahren nach einem der Ansprüche 13 bis 15, bei dem die Glasschicht (40) im Siebdruckverfahren so bedruckt wird, dass ein Bereich der Folie (30) verdeckt wird.

## Claims

1. Element (10) for a motor vehicle body part successively comprising a main body (20) of plastic material, covered at least partially with a film (30) comprising a heating track (32), the film (30) being itself covered at least partially by a layer of glass (40), **characterized in that** the glass layer (40) has a thickness between 100 µm and 800 µm, preferably less than 500 µm.

2. Element (10) according to the preceding claim, wherein the main body (20) is overmolded on the film (30) and the glass layer (40).

3. Element (10) according to one of the preceding claims wherein the film (30) comprises a connecting element (34) capable of connecting the heating tracks (32) to an energy source.

4. Element (10) according to claims 2 and 3 wherein the main body (20) is overmolded on the connecting element (34).

5. Element (10) according to one of the preceding claims wherein the film (30) is a PVB film or a transparent plastic film.

6. Element (10) according to one of the preceding claims wherein the film (30) comprises a face covered by the glass layer (40) and an adhesive layer (44) affixed to said face which is suitable for adhering with the glass layer 40.

7. Element (10) according to one of the preceding claims wherein the glass layer (40) is at least partially screen-printed and is capable of masking an area of the film (30).

8. Element (10) according to one of the preceding claims which is a radome.

9. Method of manufacturing an element (10) of body part according to one of the preceding claims by means of a mold comprising a molding cavity, **characterized in that**:
- the glass layer (40) is deposited on a wall of the molding cavity,
- the film (30) is deposited on the glass layer (40),
- the main body (20) is overmolded by injection of plastic material into the cavity.

10. Method according to the preceding claim wherein the film (30) comprising the heating tracks (32) comprises a connecting element (34), capable of connecting the heating tracks (32) to an energy source, on which the plastic main body (20) is overmolded.

11. Method according to one of claims 9 and 10 wherein the film (30) is glued to the glass layer (40) using an adhesive layer (44) affixed to the film.

12. Method according to one of claims 9 to 11 wherein the glass layer (40) is screen printed to hide an area of the film.

13. Method of manufacturing an element (10) of body part according to one of claims 1 to 8 by means of a mold comprising a molding cavity, **characterized in that**:
- the film (30) is deposited on the glass layer (40),
- the glass layer (40) is deposited on a wall of the molding cavity,
- the main body (20) is overmolded by injection of plastic material into the cavity.

14. Method according to the preceding claim wherein the film (30) comprising the heating tracks (32) comprises a connecting element (34), capable of connecting the heating tracks (32) to an energy source, on which the plastic main body (20) is overmolded.

15. Method according to one of claims 13 and 14 wherein the film (30) is glued to the glass layer (40) using an adhesive layer (44) affixed to the film (30).

16. Method according to one of claims 13 to 15 wherein the glass layer (40) is screen printed to hide an area of the film (30).
